# EUROPEAN PATENT APPLICATION

(11) **EP 4 382 566 A1**
(43) Date of publication of application: **12.06.2024**
(21) Application number: 22853199.2
(22) Date of filing: 05.08.2022
(51) Int. Cl.: C08L 21/00, B60C 1/00, C08K 5/18, C08K 5/3437

(54) **TIRE RUBBER COMPOSITION, AND TIRE**

(30) Priority: 06.08.2021 JP 2021130356
(71) Applicant: BRIDGESTONE CORPORATION, Chuo-ku Tokyo 104-8340 (JP)
(72) Inventor: SAITO, Kosuke, Tokyo 104-8340 (JP)
(74) Representative: Marks & Clerk LLP
(86) International application number: PCT/JP2022/030190
(87) International publication number: WO 2023/013781

(57) **Abstract**

The present disclosure provides a rubber composition for tires with excellent ozone resistance and high retention rates of elongation at break (EB) and tensile strength (TB) after aging. The rubber composition includes a rubber component, an amine-based antioxidant represented by the following general formula (1): 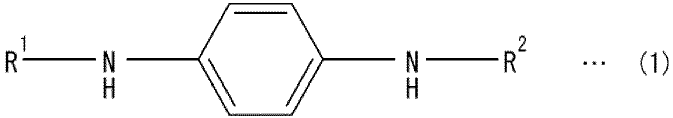 where R¹ and R² are each independently a monovalent saturated hydrocarbon group, and a quinoline-based antioxidant. The content of the amine-based antioxidant is 0.1 to 11 parts by mass per 100 parts by mass of the rubber component, and the content of the quinoline-based antioxidant is 1.75 to 2.5 parts by mass per 100 parts by mass of the rubber component.

## Description

### TECHNICAL FIELD

The present disclosure relates to a rubber composition for tires, and a tire.

### BACKGROUND

In general, various rubber members forming a tire degrade due to the effect of the outside air environment, such as the presence of ozone. As the degradation progresses, it can lead to the formation of cracks or the like. To address this issue, rubber compositions containing an antioxidant are often applied to the various rubber members forming a tire.

For example, PTL 1 described below discloses that by applying a rubber composition containing a specific quinoline-based antioxidant and N-phenyl-N'-(1,3-dimethylbutyl)-p-phenylenediamine (Antioxidant 6PPD) to the rubber constituting the surface of a tire, cracks and discoloration on the tire surface can be suppressed.

### CITATION LIST

### Patent Literature

PTL 1: WO 2018/056384 A1

### SUMMARY

### (Technical Problem)

However, N-phenyl-N'-(1,3-dimethylbutyl)-p-phenylenediamine (Antioxidant 6PPD) used in PTL 1 mentioned above may have an environmental impact, and it is thus demanded to use an antioxidant with a lower environmental impact, considering factors such as the possibility of future regulations under European legislation. To address this, it could be considered not to use the antioxidant 6PPD in the rubber composition. However, we have conducted studies and discovered that using only quinoline-based antioxidants without using the antioxidant 6PPD resulted in a significant decrease in ozone resistance of the rubber composition. Moreover, the durability of the rubber composition after aging, especially the elongation at break (EB) and tensile strength (TB), was significantly reduced.

To solve this problem occurring with conventional techniques, it would be helpful to provide a rubber composition for tires with excellent ozone resistance and high retention rates of elongation at break (EB) and tensile strength (TB) after aging without using the antioxidant 6PPD.

In addition, it would be also helpful to provide a tire with excellent ozone resistance and excellent durability after aging.

### (Solution to Problem)

The primary features of a rubber composition for tires and a tire of the present disclosure that solve the above problem are as follows.
[1] A rubber composition for tires comprising:
   a rubber component;
   an amine-based antioxidant represented by the following general formula (1): 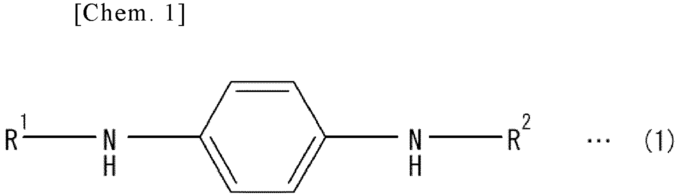 where R¹ and R² are each independently a monovalent saturated hydrocarbon group; and
   a quinoline-based antioxidant,
   wherein a content of the amine-based antioxidant is 0.1 to 11 parts by mass per 100 parts by mass of the rubber component, and
   a content of the quinoline-based antioxidant is 1.75 to 2.5 parts by mass per 100 parts by mass of the rubber component.
[2] The rubber composition for tires according to [1], wherein the rubber component comprises at least one selected from the group consisting of isoprene skeleton rubber, styrene-butadiene rubber, butadiene rubber, and chloroprene rubber.
[3] The rubber composition for tires according to [1] or [2], wherein the quinoline-based antioxidant comprises a polymer of 2,2,4-trimethyl-1,2-dihydroquinoline.
[4] The rubber composition for tires according to any one of [1] to [3], wherein R¹ and R² in the above general formula (1) are each independently a chain or cyclic monovalent saturated hydrocarbon group having 1 to 20 carbon atoms.
[5] The rubber composition for tires according to any one of [1] to [4], further comprising a wax, wherein a content of the wax is 0.1 to 5 parts by mass per 100 parts by mass of the rubber component.
[6] A tire comprising a rubber member made of the rubber composition for tires according to any one of [1] to [5].

### (Advantageous Effect)

The present disclosure may provide a rubber composition for tires with excellent ozone resistance and high retention rates of elongation at break (EB) and tensile strength (TB) after aging.

The present disclosure may also provide a tire with excellent ozone resistance and excellent durability after aging.

### DETAILED DESCRIPTION

The rubber composition for tires and the tire of the present disclosure are described below in detail with reference to embodiments thereof.

### <Rubber composition for tires>

The rubber composition for tires of the present disclosure includes a rubber component, an amine-based antioxidant represented by the following general formula (1): 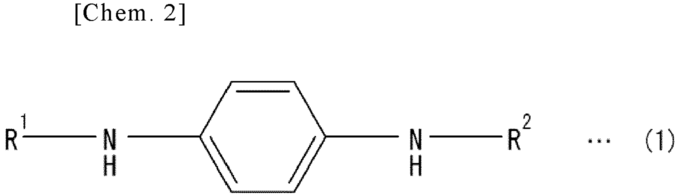 [in the formula, R¹ and R² are each independently a monovalent saturated hydrocarbon group], and a quinoline-based antioxidant. Further, in the rubber composition for tires of the present disclosure, the content of the amine-based antioxidant is 0.1 to 11 parts by mass per 100 parts by mass of the rubber component, and the content of the quinoline-based antioxidant is 1.75 to 2.5 parts by mass per 100 parts by mass of the rubber component.

In the rubber composition for tires of the present disclosure, the amine-based antioxidant represented by the above general formula (1) and the quinoline-based antioxidant are used together, and the content of the amine-based antioxidant is set to 0.1 parts by mass or more per 100 parts by mass of the rubber component and the content of the quinoline-based antioxidant is set to 1.75 parts by mass or more per 100 parts by mass of the rubber component. As a result, ozone resistance of the rubber composition can be sufficiently ensured and the decreases in elongation at break (EB) and tensile strength (TB) of the rubber composition after aging can be suppressed.

Accordingly, the rubber composition for tires of the present disclosure has excellent ozone resistance and high retention rates of elongation at break (EB) and tensile strength (TB) after aging.

Additionally, in the rubber composition for tires of the present disclosure, the content of the amine-based antioxidant is set to 11 parts by mass or less per 100 parts by mass of the rubber component, while the content of the quinoline-based antioxidant is set to 2.5 parts by mass or less per 100 parts by mass of the rubber component. This also suppresses adverse effects on rubber properties other than ozone resistance (heat buildup property etc.), which makes the composition suitable for tire applications.

Furthermore, the amine-based antioxidant represented by the above general formula (1) contained in the rubber composition for tires of the present disclosure also has the advantage of being environmentally friendly because R¹ and R² in the general formula (1) are monovalent saturated hydrocarbon groups.

### (Rubber component)

The rubber composition for tires of the present disclosure contains a rubber component, and the rubber component provides rubber elasticity to the composition. As the rubber component, diene rubber is preferred, and isoprene skeleton rubber, styrene-butadiene rubber (SBR), butadiene rubber (BR), and chloroprene rubber (CR) are more preferred. As used herein, isoprene skeleton rubber refers to rubber with isoprene units as the main skeleton thereof, examples thereof specifically include natural rubber (NR) and synthetic isoprene rubber (IR). When the rubber component includes at least one selected from the group consisting of isoprene skeleton rubber, styrene-butadiene rubber, butadiene rubber, and chloroprene rubber, the rubber composition has excellent rubber elasticity and becomes more suitable for tire applications. Moreover, when the rubber component includes at least one selected from the group consisting of isoprene skeleton rubber, styrene-butadiene rubber, butadiene rubber, and chloroprene rubber, the effects of the present disclosure (improvement in ozone resistance by the combined use of the amine-based antioxidant and the quinoline-based antioxidant, and effects in suppressing the decreases in elongation at break (EB) and tensile strength (TB) after aging) are likely to be prominently achieved. The content of diene rubber, such as isoprene skeleton rubber, styrene-butadiene rubber, butadiene rubber, and chloroprene rubber, in the rubber component is preferably 80 mass% or more, more preferably 90 mass% or more, and may be 100 mass%. One of the above-mentioned rubber components may be used individually, or two or more of them may be used as a blend.

### (Amine-based antioxidant)

The rubber composition for tires of the present disclosure contains an amine-based antioxidant represented by the above general formula (1). Although the amine-based antioxidant represented by the general formula (1) contains a phenylenediamine moiety similar to N-phenyl-N'-(1,3-dimethylbutyl)-p-phenylenediamine (Antioxidant 6PPD), it differs from the antioxidant 6PPD in that it has no double bond other than the phenylenediamine moiety. The amine-based antioxidant represented by the general formula (1) has the effects of improving the ozone resistance of the rubber composition and suppressing the decreases in the retention rates of elongation at break (EB) and tensile strength (TB) after aging.

In the above general formula (1), R¹ and R² are each independently a monovalent saturated hydrocarbon group. R¹ and R² can be the same or different, but from a synthetic point of view, they are preferably the same.

The number of carbon atoms of the monovalent saturated hydrocarbon group is preferably 1 to 20, more preferably 3 to 10, and particularly preferably 6 and 7. When the number of carbons of saturated hydrocarbon groups is 20 or less, the moles per unit mass are increased, which enhances the anti-aging effect and improves the ozone resistance of the rubber composition.

From the viewpoint of further improving the ozone resistance of the rubber composition, R¹ and R² in the above general formula (1) are each independently preferably a chain or cyclic monovalent saturated hydrocarbon group having 1 to 20 carbon atoms.

Examples of the monovalent saturated hydrocarbon group include alkyl groups and cycloalkyl groups. The alkyl groups may be linear or branched, and the cycloalkyl groups may further have alkyl groups, etc., attached as substituents.

Examples of the alkyl groups include methyl group, ethyl group, n-propyl group, isopropyl group, n-butyl group, isobutyl group, sec-butyl group, tert-butyl group, 1,2-dimethylbutyl group, 1,3-dimethylbutyl group, 2,3-dimethylbutyl group, n-pentyl group, isopentyl group, neopentyl group, 1-methylpentyl group, 2-methylpentyl group, 3-methylpentyl group, 4-methylpentyl group, 1,2-dimethylpentyl group, 1,3-dimethylpentyl group, 1,4-dimethylpentyl group, 2,3-dimethylpentyl group, 2,4-dimethylpentyl group, 3,4-dimethylpentyl group, n-hexyl group, 1-methylhexyl group, 2-methylhexyl group, octyl groups, decyl groups, and dodecyl groups, of which 1,4-dimethylpentyl group is preferred.

Examples of the cycloalkyl group include cyclopentyl group, methylcyclopentyl groups, cyclohexyl group, methylcyclohexyl groups, cycloheptyl group, and cyclooctyl group, of which cyclohexyl group is preferred.

Examples of the amine-based antioxidant represented by the above general formula (1) specifically include N,N'-bis(1,4-dimethylpentyl)-p-phenylenediamine (Antioxidant 77PD), N,N'-bis(1-ethyl-3-methylpentyl)-p-phenylenediamine, and N,N'-dicyclohexyl-p-phenylenediamine (Antioxidant CCPD). Among these, N,N'-bis(1,4-dimethylpentyl)-p-phenylenediamine (Antioxidant 77PD) and N,N'-dicyclohexyl-p-phenylenediamine (CCPD) are preferable, with N,N'-bis(1,4-dimethylpentyl)-p-phenylenediamine (Antioxidant 77PD) being particularly preferred. The above-mentioned amine-based antioxidants may be used alone or in combination of two or more.

The content of the amine-based antioxidant is 0.1 to 11 parts by mass per 100 parts by mass of the rubber component. If the content of the amine-based antioxidant is less than 0.1 parts by mass per 100 parts by mass of the rubber component, ozone resistance of the rubber composition cannot be sufficiently ensured and the decreases in elongation at break (EB) and tensile strength (TB) of the rubber composition after aging cannot be sufficiently suppressed. On the other hand, if the content of the amine-based antioxidant exceeds 11 parts by mass per 100 parts by mass of the rubber component, the adverse effects on rubber properties other than ozone resistance (heat buildup property etc.) increase, which makes the composition unsuitable for tire applications. The content of the amine-based antioxidant is preferably 0.5 parts by mass or more, even preferably 1 part by mass or more per 100 parts by mass of the rubber component from the viewpoint of ozone resistance, and is preferably 10 parts by mass or less, and even preferably 9 parts by mass or less per 100 parts by mass of the rubber component from the viewpoint of effect on other rubber properties.

### (Quinoline-based antioxidant)

The rubber composition for tires contains a quinoline-based antioxidant. The quinoline-based antioxidant is an antioxidant having a quinoline moiety or a derivative moiety thereof (such as a dihydroquinoline moiety). The quinoline-based antioxidant has the effects of improving the ozone resistance of the rubber composition and suppressing the decreases in the retention rates of elongation at break (EB) and tensile strength (TB) after aging.

The quinoline-based antioxidant preferably has a dihydroquinoline moiety, and even preferably has a 1,2-dihydroquinoline moiety.

Specifically, examples of the quinoline-based antioxidant include a polymer of 2,2,4-trimethyl-1,2-dihydroquinoline (Antioxidant TMDQ), 6-ethoxy-2,2,4-trimethyl-1,2-dihydroquinoline, and 6-anilino-2,2,4-trimethyl-1,2-dihydroquinoline.

The quinoline-based antioxidant preferably contains a polymer of 2,2,4-trimethyl-1,2-dihydroquinoline (Antioxidant TMDQ). A quinoline-based antioxidant containing a polymer of 2,2,4-trimethyl-1,2-dihydroquinoline is highly effective in improving the ozone resistance of the rubber composition, and also has the advantage of being less prone to causing discoloration of the rubber composition.

Note that examples of the polymer of 2,2,4-trimethyl-1,2-dihydroquinoline include a dimer, trimer, and tetramer of 2,2,4-trimethyl-1,2-dihydroquinoline.

The content of the quinoline-based antioxidant is 1.75 to 2.5 parts by mass per 100 parts by mass of the rubber component. If the content of the quinoline-based antioxidant is less than 1.75 parts by mass per 100 parts by mass of the rubber component, ozone resistance of the rubber composition cannot be sufficiently ensured and the decreases in elongation at break (EB) and tensile strength (TB) of the rubber composition after aging cannot be sufficiently suppressed. On the other hand, if the content of the quinoline-based antioxidant exceeds 2.5 parts by mass per 100 parts by mass of the rubber component, the adverse effects on rubber properties other than ozone resistance (heat buildup property etc.) increase, which makes the composition unsuitable for tire applications. The content of the quinoline-based antioxidant is preferably 1.8 parts by mass or more, even preferably 1.85 parts by mass or more per 100 parts by mass of the rubber component from the viewpoint of ozone resistance, and is preferably 2.45 parts by mass or less, even preferably 2.4 parts by mass or less per 100 parts by mass of the rubber component from the viewpoint of effects on other rubber properties.

### (Wax)

The rubber composition for tires of the present disclosure preferably further contains a wax. When the rubber composition contains a wax, the ozone resistance of the rubber composition is further improved.

Examples of the wax include paraffin wax and microcrystalline wax.

The content of the wax is preferably 0.1 to 5 parts by mass per 100 parts by mass of the rubber component. When the content of the wax is 0.1 parts by mass or more per 100 parts by mass of the rubber component, the ozone resistance of the rubber composition is further improved. Furthermore, when the content of the wax is 5 parts by mass or less per 100 parts by mass of the rubber component, the effects on rubber properties other than ozone resistance are small. The content of the wax is more preferably 0.5 parts by mass or more, even more preferably 1 part by mass or more per 100 parts by mass of the rubber component from the viewpoint of ozone resistance, and is more preferably 4 parts by mass or less, even more preferably 3 parts by mass or less per 100 parts by mass of the rubber component from the viewpoint of effect on other rubber properties.

### (Sulfur)

The rubber composition for tires of the present disclosure preferably contains sulfur. The inclusion of sulfur in the rubber composition enables vulcanization and improves the durability (particularly elongation at break (EB) and tensile strength (TB)) of the rubber composition.

Various types of sulfur can be used as the sulfur, but generally-used sulfur (e.g., soluble sulfur (powdered sulfur)) is preferred over insoluble sulfur, and oil-treated sulfur is also preferred. As used herein, insoluble sulfur is sulfur that is insoluble in carbon disulfide (amorphous polymeric sulfur), and soluble sulfur (powdered sulfur) is sulfur that is soluble in carbon disulfide.

The content of the sulfur is preferably in a range of 0.1 to 10 parts by mass and even preferably in a range of 1 to 5 parts by mass per 100 parts by mass of the rubber component. When the content of the sulfur is 0.1 parts by mass or more per 100 parts by mass of the rubber component, the durability of vulcanized rubber can be secured, and when the content is 10 parts by mass or less per 100 parts by mass of the rubber component, sufficient rubber elasticity can be ensured.

### (Other components)

In addition to the rubber component, the amine-based antioxidant, the quinoline-based antioxidant, the wax, and the sulfur mentioned above, the rubber composition for tires of the present disclosure may contain various components generally used in the rubber industry, such as fillers (e.g., silica, carbon black, and calcium carbonate), silane coupling agents, softening agents, processing aids, resins, surfactants, organic acids (e.g., stearic acid), zinc oxide (zinc white), vulcanization accelerators, and vulcanizing agents other than sulfur, which may be selected as needed, to the extent that they do not impair the purpose of the present disclosure. Commercial products are suitable for use as these compounding agents.

Note that the amine-based antioxidant represented by the above general formula (1) may be supported on any carrier. For example, the amine-based antioxidant represented by the above general formula (1) may be supported on an inorganic filler such as silica and calcium carbonate.

Furthermore, the amine-based antioxidant represented by the above general formula (1) may be a master batch with the rubber component.

Here, the rubber component used to produce the master batch is not limited, and may be diene rubber such as natural rubber (NR), or ethylene-propylene-diene rubber (EPDM), or the like.

Furthermore, the amine-based antioxidant represented by the above general formula (1) may also be a salt with an organic acid. Here, the organic acid used to form the salt is not particularly limited, and examples include stearic acid.

### (Method of manufacturing rubber composition)

The method of manufacturing the rubber composition is not particularly limited, but the rubber composition can be manufactured, for example, by blending the rubber component, the amine-based antioxidant, and the quinoline-based antioxidant mentioned above with various components selected as needed, and then kneading, warming, extruding, etc. Furthermore, the resulting rubber composition can be vulcanized to produce vulcanized rubber.

There are no particular limitations on the kneading conditions, and various conditions, such as the volume charged into the kneading apparatus, the rotor rotation speed, the ram pressure, the kneading temperature, the kneading time, and the type of the kneading apparatus, may be appropriately selected depending on the purpose. Examples of the kneading apparatus include Banbury mixers, intermixes, kneaders, rolls, and other apparatuses, which are generally used for kneading rubber compositions.

There are also no particular limitations on the conditions of warming, and various conditions such as warming temperature, warming time, and warming apparatus can be appropriately selected depending on the purpose. Examples of the warming apparatus include a warming roller machine and other apparatuses generally used for warming rubber compositions.

There are also no particular limitations on the conditions of extrusion, and various conditions such as extrusion time, extrusion speed, extrusion apparatus, and extrusion temperature can be appropriately selected depending on the purpose. Examples of the extrusion apparatus include an extruder and other apparatuses generally used for extruding rubber compositions. The extrusion temperature can be determined as appropriate.

There are no particular limitations on the apparatus, method, conditions, etc. for performing the vulcanization, which may be appropriately selected depending on the purpose. Examples of the apparatus for vulcanization include molding vulcanizers and other apparatuses generally used for vulcanizing rubber compositions. The conditions for vulcanization are such that the temperature is, for example, 100°C to 190°C.

### <Tire>

The tire of the present disclosure includes a rubber member made of the rubber composition for tires described above. The tire of the present disclosure has excellent ozone resistance and durability after aging because it has a rubber member made of the rubber composition for tires. The tire of the present disclosure also has the advantage of being environmentally friendly.

Examples of the rubber member to which the above-described rubber composition for tires is applied include side rubbers, tread rubbers, inner liners, etc., which form the tire surface. The rubber member to which the above-described rubber composition for tires is applied may be a rubber member forming the interior of the tire, such as bead fillers, coating rubber for reinforcing members such as carcasses and belts, and the like.

In accordance with the type of tire to be applied, the tire of the present disclosure may be obtained by first shaping a tire using an unvulcanized rubber composition and then vulcanizing the tire, or by first shaping a tire using semi-vulcanized rubber yielded by a preliminary vulcanization process and then fully vulcanizing the tire. The tire of the present disclosure is preferably a pneumatic tire. The pneumatic tire may be filled with ordinary air or air with an adjusted partial pressure of oxygen, or may also be filled with an inert gas such as nitrogen, argon, or helium.

### EXAMPLES

The present disclosure will be described in more detail below with reference to examples, although the present disclosure is not limited to these examples.

### <Comparative Example 1>

### (Method of manufacturing rubber composition)

The rubber composition of Comparative Example 1 was manufactured according to the formulation listed in Table 1. The contents of the antioxidants used are listed in Table 2.

**[Table 1]**

| | Amount (parts by mass) |
|---|---|
| NR *1 | 35 |
| SBR *2 | 77 |
| Silica*3 | 58 |
| Carbon black *4 | 6 |
| Wax *5 | 1.7 |
| Antioxidant 77PD *6 | See Appendix |
| Antioxidant TMDQ *7 | |
| Sulfur *8 | 2 |
| Other agents *9 | 24.5 |

| | |
|---|---|
| *1 NR: natural rubber *2 SBR: total content of styrene-butadiene rubber [bound styrene content = 20 mass%, vinyl bond content in a butadiene moiety = 55 mass%, glass transition temperature (Tg) = -40°C] and oil-extended rubber of styrene-butadiene rubber [bound styrene content = 45 mass%, vinyl bond content in a butadiene moiety = 19 mass%, glass transition temperature (Tg) = -30°C], of which 12 parts by mass was oil-extended *3 Silica: trade name "Nipseal AQ" manufactured by Tosoh Silica Corporation *4 Carbon black: trade name "Asahi #78" manufactured by Asahi Carbon Co., Ltd. *5 Wax: total amount of microcrystalline wax, trade name "Ozoace-0701" manufactured by Nippon Seiro Co., Ltd. and trade name "Ozoace-0301" manufactured by Nippon Seiro Co., Ltd. *6 Antioxidant 77PD: N,N'-bis(1,4-dimethylpentyl)-p-phenylenediamine as an amine-based antioxidant where R¹ and R² in the general formula (1) are saturated hydrocarbon groups (1,4-dimethylpentyl groups), trade name "Santoflex 77PD" manufactured by EASTMAN Chemical Company *7 Antioxidant TMDQ: polymer of 2,2,4-trimethyl-1,2-dihydroquinoline as a quinoline-based antioxidant *8 Sulfur: trade name "HK200-5" manufactured by Hosoi Chemical Industry Co., Ltd., 5% oil *9 Other agents: total amount of agents containing at least trade name "ABC-856" (silane coupling agent) manufactured by Shin-Etsu Chemical Co., Ltd., trade name "Kiri-jirushi stearic acid" (stearic acid) manufactured by NOF Corporation, zinc oxide manufactured by HakusuiTech Co., Ltd., trade name "Sanceler CM-G" (accelerator) manufactured by Sanshin Chemical Industry Co., Ltd., and trade name "MS-95" manufactured by Kao Corporation | |

### (Evaluation of rubber composition)

The retention rates of elongation at break (EB) and tensile strength (TB) after aging and ozone resistance of the obtained composition were evaluated by the following methods. The results are listed in Table 2.

### (1) Retention rates of elongation at break (EB) and tensile strength (TB) after aging

The rubber composition was vulcanized to prepare vulcanized rubber test pieces. A tensile test was conducted on the test pieces immediately after fabrication in accordance with JIS K 6251 to measure initial elongation at break (EB) and tensile strength (TB).

Then, the vulcanized rubber test pieces were then aged by allowing to stand at 100°C for 24 hours, and a tensile test was conducted on the aged test pieces in accordance with JIS K 6251 to measure elongation at break (EB) and tensile strength (TB) after aging.

The retention rates of elongation at break (EB) and tensile strength (TB) after aging were calculated from the initial elongation at break (EB) and tensile strength (TB) and the elongation at break (EB) and tensile strength (TB) after aging according to the following formulae.

Retention rate of elongation at break (EB) after aging = elongation at break (EB) after aging / initial elongation at break (EB) × 100 (%)

Retention rate of tensile strength (TB) after aging = Tensile strength (TB) after aging / initial tensile strength (TB) × 100 (%)

### (2) Ozone resistance

A dynamic ozone degradation test (test in which a strain was applied repeated) and a static ozone degradation test (test in which a certain strain was applied and the sample was left to stand) were conducted in accordance with JIS K 6259-1 to evaluate ozone resistance. The evaluation was made by rating and classifying based on the number of cracks according to the following criteria (A to C), as well as rating and classifying based on the size and depth of the cracks according to the following criteria (1 to 5).

### -- Rating based on number of cracks --

A: A few cracks observed
B: A lot of cracks observed
C: A countless cracks observed

### -- Rating based on size and depth of cracks --

1: Crack not visible to the naked eye, but observable under a 10× magnifying glass.
2: Crack visible to the naked eye.
3: Deep, relatively large crack (measuring less than 1 mm).
4: Deep, large crack (measuring 1 mm or longer and less than 3 mm).
5: Crack measuring 3 mm or longer, or test piece likely to be severed

### <Examples 1 to 3 and Comparative Example 2>

Rubber compositions are manufactured according to the formulations listed in Tables 1 and 2, and the retention rates of elongation at break (EB) and tensile strength (TB) after aging and ozone resistance are evaluated using the methods described above.

### <Evaluation of at heat buildup property>

The tan δ (50°C) of each vulcanized rubber (a cylindrical shape with Φ = 8 mm and height = 6 mm) are measured under the conditions of a shear deformation strain rate of 10%, a frequency of 15 Hz, and a temperature of 50°C using ARES-G2 (manufactured by TA Instruments).

The evaluation result of tan δ (50°C) of each vulcanized rubber is listed in the column of "Heat buildup property", in which the result of tan δ (50°C) of the standard example (Comparative Example 1) is 100 as an index for comparisons.

A smaller heat buildup property index indicates better rolling performance (low rolling resistance performance).

**[Table 2]**

| | | | | Comp. Ex. 1 | Example 1 | Example 2 | Comp. Ex. 2 | Example 3 |
|---|---|---|---|---|---|---|---|---|
| Amount of antioxidant | Antioxidant 77PD *6 | | parts by mass | 3.04 | 3.1 | 3.1 | 3.1 | 8 |
| | Antioxidant TMDQ *7 | | | 0.72 | 2 | 2.3 | 2.8 | 2.3 |
| Evaluation results | Retention rate of EB after aging | | % | 77 | 85 | 87 | 90 | 87.4 |
| | Retention rate of TB after aging | | % | 92 | 93 | 93 | 94 | 93.2 |
| | Ozone resistance | Dynamic ozone degradation test | - | B-2 | B-1 | B-1 | B-1 | A-2 |
| | | Static ozone degradation test | - | B-4 | B-2 | B-2 | B-2 | B-2 |
| | Heat buildup property | | Index | 100 | 104 | 106 | 112 | 106 |

Table 2 indicates that excellent oone resistance and high retention rates of elongation at break (EB) and tensile strenght (TB) after aging are achieved without using the antioxidant represented by the above general formula (1) are 0.1 to 11 parts by mass per 100 parts by mass of the rubber component and the contents of the quinoline-based antioxidant are 1.75 to 2.5 parts by mass per 100 parts by mass of the rubber component. In addition, it is indicated from Comparative Example 2 that the heat buildup property deteriorates when the content of the quinoline-based antioxidant exceeded 2.5 parts by mass per 100 parts by mass of the rubber component.

## Claims

1. A rubber composition for tires comprising:
a rubber component;
an amine-based antioxidant represented by the following general formula (1): 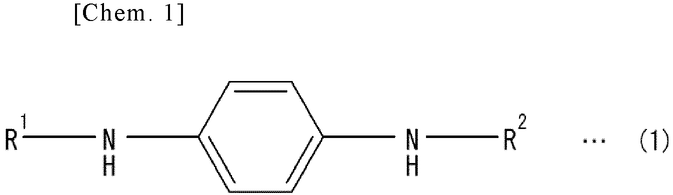 where R¹ and R² are each independently a monovalent saturated hydrocarbon group; and
a quinoline-based antioxidant,
wherein a content of the amine-based antioxidant is 0.1 to 11 parts by mass per 100 parts by mass of the rubber component, and
a content of the quinoline-based antioxidant is 1.75 to 2.5 parts by mass per 100 parts by mass of the rubber component.

2. The rubber composition for tires according to claim 1,
wherein the rubber component comprises at least one selected from the group consisting of isoprene skeleton rubber, styrene-butadiene rubber, butadiene rubber, and chloroprene rubber.

3. The rubber composition for tires according to claim 1 or 2, wherein the quinoline-based antioxidant comprises a polymer of 2,2,4-trimethyl-1,2-dihydroquinoline.

4. The rubber composition for tires according to any one of claims 1 to 3, wherein R¹ and R² in the above general formula (1) are each independently a chain or cyclic monovalent saturated hydrocarbon group having 1 to 20 carbon atoms.

5. The rubber composition for tires according to any one of claims 1 to 4, further comprising a wax, wherein a content of the wax is 0.1 to 5 parts by mass per 100 parts by mass of the rubber component.

6. A tire comprising a rubber member made of the rubber composition for tires according to any one of claims 1 to 5.
